**Europäisches Patentamt**

**European Patent Office**

**Office européen des brevets**

(11) Numéro de publication : **0 536 041 A1**

# (12) DEMANDE DE BREVET EUROPEEN

(21) Numéro de dépôt : **92402667.7**

(22) Date de dépôt : **29.09.92**

(51) Int. Cl.$^5$ : **H04B 10/20,** H04B 10/14

(30) Priorité : **04.10.91 FR 9112264**

(43) Date de publication de la demande :
**07.04.93 Bulletin 93/14**

(84) Etats contractants désignés :
**AT BE CH DE ES FR GB IT LI NL SE**

(71) Demandeur : **ALCATEL CIT**
**12 Rue de la Baume**
**F-75008 Paris (FR)**

(72) Inventeur : **Perrier, Philippe**
**144, avenue d'Italie**
**F-75013 Paris (FR)**
Inventeur : **Gautheron, Olivier**
**180bis, rue de Paris**
**F-91120 Palaiseau (FR)**

(74) Mandataire : **El Manouni, Josiane et al**
**SOSPI 14-16, rue de la Baume**
**F-75008 Paris (FR)**

(54) **Procédé d'allocation dynamique de terminaux d'abonnés au centre local d'un réseau de télécommunications optique.**

(57)  Ce système de raccordement optique de terminaux d'abonnés à un centre local d'un réseau de télécommunications, lesdits terminaux d'abonnés comportant chacun un émetteur optique ($S_{2n}$) et un récepteur optique ($D_{2n}$), et le centre local comportant une pluralité de joncteurs comportant chacun un émetteur optiqe ($S_{1m}$) et un récepteur optique ($D_{1m}$), comporte, pour un sens de transmission donné, des moyens (CE) de distribution, à tous les récepteurs optiques, du signal optique émis par chacun des émetteurs optiques, sur une porteuse optique différente pour chacun de ces émetteurs, et des moyens de filtrage spectral du signal optique distribué vers chaque récepteur optique, sélectionnant la porteuse optique de celui des émetteurs qui lui est associé, pour une communication déterminée, par des moyens d'affectation dynamique de ces différents émetteurs optiques à ces différents récepteurs optiques.

FIG. 2

EP 0 536 041 A1

La présente invention concerne un système de raccordement optique de terminaux d'abonnés à un centre local d'un réseau de télécommunications.

On sait que le raccordement de terminaux d'abonnés à leur centre local de rattachement, dans le réseau téléphonique par exemple, s'effectue par l'intermédiaire d'organes appelés joncteurs d'abonnés, localisés dans ce centre local et permettant chacun de réaliser, sur une ligne téléphonique par l'intermédiaire de laquelle il est relié, par un système de raccordement non encore précisé, à l'un de ces terminaux, un certain nombre de fonctions, notamment de signalisation, tenant compte de la nature de cette ligne et de ce terminal, et nécessaires pour qu'une communication intéressant ce terminal puisse avoir lieu sur cette ligne.

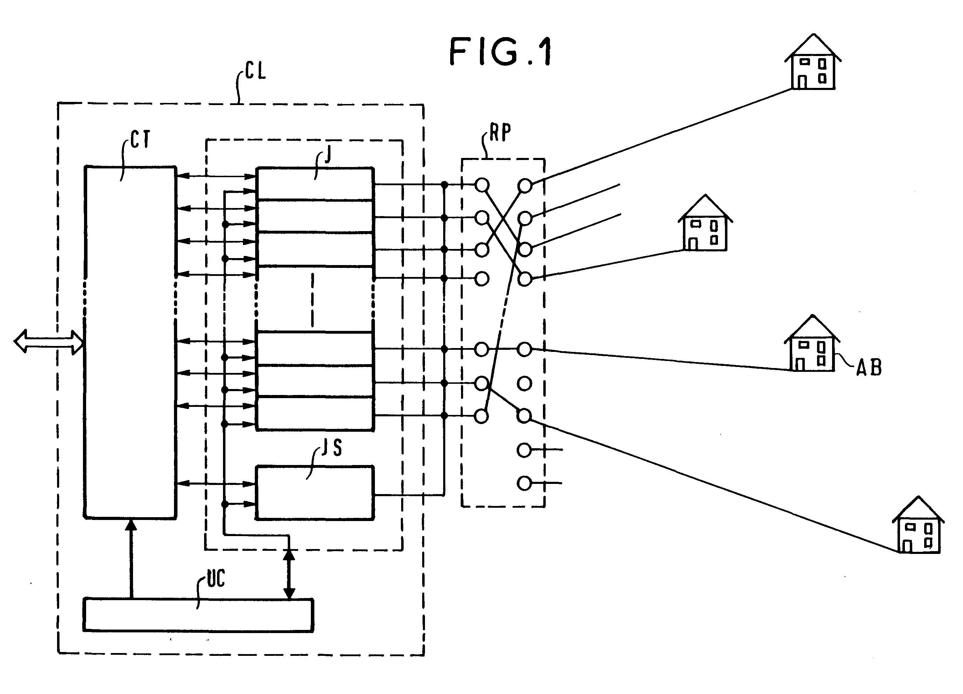

A l'heure actuelle, ledit système de raccordement est tel que chaque abonné, AB, rattaché à un centre local, CL, est raccordé en permanence à un joncteur d'abonné, J, de ce centre, suivant un schéma de raccordement fixe du type rappelé sur la figure 1, modifiable seulement par action sur un organe appelé répartiteur, noté RP.

On rappelle qu'un centre local doit permettre des communications, dites locales, entre des abonnés qui lui sont rattachés et des communications, dites externes, entre des abonnés qui lui sont rattachés et des abonnés rattachés à d'autres centres locaux de ce réseau, et que dans ce dernier cas un organe spécifique, appelé concentrateur, noté CT, intervient à l'interface avec les liaisons entrant ou sortant de ce centre local, dites jonctions entrantes ou sortantes, pour tenir compte du fait que ces jonctions sont en nombre inférieur à celui des lignes d'abonnés.

On a en outre mentionné sur la figure 1 l'unité de commande, UC, du centre local, qui communique respectivement avec les joncteurs J et avec le concentrateur CT, pour réaliser, de façon connue et non rappelée ici, les différentes fonctions impliquées par le traitement d'une communication intéressant les abonnés rattachés à ce centre.

Un tel système de raccordement présente de nombreux inconvénients. Ainsi, chaque ligne d'abonné étant physiquement reliée à l'un des joncteurs, toute modification de ce schéma de raccordement nécessite l'intervention manuelle d'un agent pour réaliser les opérations requises de connexion/déconnexion sur le répartiteur.

En outre, l'existence d'une connexion physique entre un terminal d'abonné et un joncteur impliquant que le nombre de joncteurs soit au moins égal au nombre d'abonnés, le rendement d'un tel système de raccordement est relativement mauvais puisque les abonnés ainsi raccordés ne sont en général pas tous simultanément en communication.

Par ailleurs la sécurisation de chaque raccordement terminal d'abonné-joncteur ainsi obtenu nécessite de prévoir au moins un joncteur supplémentaire, dit de secours, JS, ayant pour fonction de remplacer, à travers un dispositif de commutation spécifique, un joncteur défaillant.

Le système de raccordement ainsi rappelé sur la figure 1 est utilisé pour des lignes téléphoniques véhiculant des signaux sous forme électrique.

Après le succès remporté par la technologie photonique dans les systèmes de transmission dits point-à-point (ici, entre centres locaux) il est maintenant envisagé de prolonger l'utilisation de la fibre optique jusque chez l'abonné.

Plusieurs architectures ont déjà été proposées pour une telle réalisation photonique d'un système de raccordement de terminaux d'abonnés.

Une première architecture utilise ainsi un principe de multiplexage-démultiplexage temporel. Dans un sens dit descendant (soit du centre local vers les abonnés), des communications destinées à différents abonnés sont multiplexées temporellement et transmises, sur une fibre optique, à un centre auxiliaire qui démultiplexe alors les communications et les transmet, par différentes fibres, aux destinataires appropriés. La transmission dans le sens dit montant (soit des abonnés vers le centre local) s'effectue de manière similaire : le trafic de chaque abonné, une fois parvenu au centre auxiliaire, est multiplexé temporellement avec le trafic des autres abonnés, et est envoyé au centre local où ces différents trafics sont alors démultiplexés.

Une telle architecture requiert cependant audit centre auxiliaire un traitement électronique rapide des communications, qui entraîne des pénalités de coût dues notamment à la double conversion opto-électronique et électro-optique effectuée dans ce centre auxiliaire, à l'acheminement vers ce centre de puissance électrique, à la nécessité d'un environnement contrôlé en température pour les équipements réalisant ce traitement électronique, et à leur maintenance, ces pénalités venant s'ajouter aux inconvénients identifiés précédemment, relatifs au rendement et à la sécurisation de ces systèmes de raccordement, ainsi qu'à la nécessité d'effectuer, pour modifier le schéma de raccordement, non seulement une opération de connexion-déconnexion sur un répartiteur au centre local, mais en outre, au centre auxiliaire, un changement d'allocation temporelle pour les opérations de multiplexage-démultiplexage.

Une deuxième architecture, décrite notamment dans le document IEEE Global Telecommunications Conference, paper 48.1, pp.1569-1573, 1988, S.S. Wagner, H.L. Lemberg, H. Kobrinski, L.S. Smoot, and T.J. Robe, "A passive photonic loop architecture employing wavelength-divison multiplexing", utilise un multiplexage-démultiplexage en longueur d'onde plutôt qu'un multiplexage-démultiplexage temporel, éliminant ainsi les inconvénients associés au traitement électronique. Dans cette architecture deux longueurs d'onde sont allouées en permanence à chacun des abonnés, une pour transmettre dans le sens dit montant, une autre pour transmettre dans le sens dit descendant.

De même, cette configuration exige encore un nombre de joncteurs au moins égal au nombre d'abonnés, plus un joncteur de secours supplémentaire, et nécessite, pour modifier le schéma de raccordement correspondant, un changement d'allocation de longueurs d'onde. Elle introduit, de plus, les limitations et complications suivantes :

- Le nombre d'abonnés pouvant être raccordé reste très limité, de par la technique même du multiplexage fréquentiel qui limite actuellement à une centaine voire à quelques dizaines le nombre de longueurs d'onde ainsi multiplexables.
- Les deux longueurs d'onde allouées à chaque abonné doivent être régulées pour minimiser la diaphonie. L'asservissement requis pour garantir la stabilité en longueur d'onde est rendu difficile par le fait de l'éloignement des abonnés les uns par rapport aux autres et par rapport au centre local.

La présente invention a pour but la réalisation d'un système de raccordement optique d'abonnés à un réseau de télécommunications, permettant d'éviter les différents inconvénients mentionnés dans ce qui précède.

La présente invention a pour objet un système de raccordement optique de terminaux d'abonnés à un centre local d'un réseau de télécommunications, lesdits terminaux d'abonnés comportant chacun un émetteur optique dit second émetteur optique et un récepteur optique, dit second récepteur optique, et le centre local comportant une pluralité de joncteurs comportant chacun un émetteur optique dit premier émetteur optique et un récepteur optique dit premier récepteur optique, caractérisé en ce qu'il comporte, pour un sens de transmission donné, des moyens de distribution, à tous les récepteurs optiques, du signal optique émis par chacun des émetteurs optiques, sur une porteuse optique différente pour chacun de ces émetteurs, et des moyens de filtrage spectral du signal optique distribué vers chaque récepteur optique, sélectionnant la porteuse optique de celui des émetteurs qui lui est associé, pour une communication déterminée, par des moyens d'affectation dynamique de ces différents émetteurs optiques à ces différents récepteurs optiques.

La présente invention a également pour objet un mode de réalisation particulier d'un tel système de raccordement permettant d'éviter deux autres inconvénients relatifs à la dernière architecture rappelée ci-dessus, et qui consistent dans le fait que :

- l'attribution permanente d'une longueur d'onde pour la transmission dans le sens dit montant exige que chaque terminal d'abonné soit équipé d'une source optique qui émette en outre sur une longueur d'onde différente pour chacun de ces terminaux, et qui, de plus, soit compatible avec l'équipement de réception du centre local,
- la présence d'une source optique telle qu'un laser chez l'abonné, avec tous ses contrôles, augmente de façon significative le coût d'un terminal d'abonné.

D'autres objets et caractéristiques de la présente invention apparaîtront à la lecture de la description suivante d'exemples de réalisation, faite en relation avec les dessins ci-annexés, dans lesquels, outre la figure 1 relative à l'art antérieur, et décrite ci-dessus,

- la figure 2 est un schéma de principe d'un système de raccordement optique suivant l'invention,
- la figure 3 illustre une variante de réalisation des moyens de filtrage spectral utilisés, au centre local, dans un système de raccordement optique suivant l'invention,
- la figure 4 illustre un exemple de réalisation d'un émetteur-récepteur optique équipant un terminal d'abonné.
- la figure 5 illustre un exemple de réalisation d'un système de transmission bidirectionnelle utilisable dans un système de raccordement optique suivant l'invention,
- la figure 6 rappelle le mécanisme de modulation directe de l'intensité d'une porteuse optique issue d'une source optique telle qu'une diode laser, par un signal modulant numérique, une telle modulation pouvant, suivant l'exemple de réalisation illustré sur la figure 5, être utilisé pour la transmission du centre local vers les terminaux d'abonnés,
- les figures 7A et 7B illustrent respectivement la forme temporelle de la puissance optique reçue et de la puissance optique réémise par un terminal d'abonné, suivant l'exemple de réalisation illustré sur les figures 5 et 6.

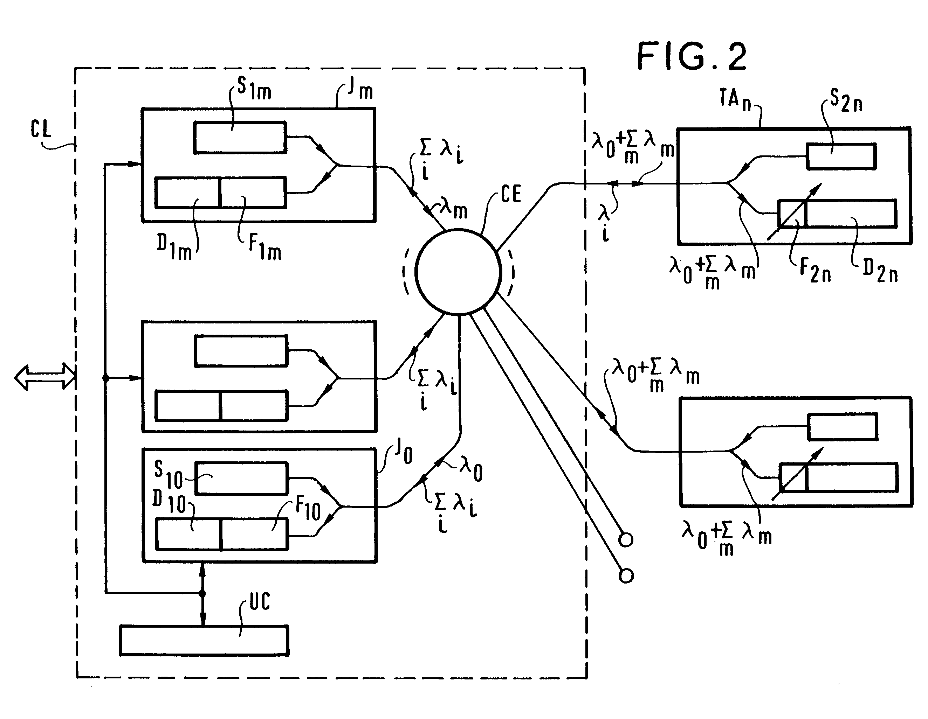

L'architecture générale d'un système de raccordement optique suivant l'invention est représentée sur la figure 2.

Dans ce système le centre local CL comporte M joncteurs dits de communication, avec $M \leq N$, où N désigne le nombre d'abonnés raccordés au réseau par l'intermédiaire de ce centre local, d'où la possibilité de M communications simultanées intéressant ces abonnés, avec avantageusement $M < N$ en vue d'un rendement optimisé de ce système de raccordement par rapport aux systèmes de raccordement de l'art antérieur.

Chaque joncteur de communication $J_m$ avec $1 \leq m \leq M$ comporte un émetteur optique, $S_{1m}$, et un récepteur optique, $D_{1m}$, et chaque terminal d'abonné $TA_n$, avec $1 \leq n \leq N$, comporte de même un émetteur optique, $S_{2n}$, et un récepteur optique, $D_{2n}$.

Dans l'exemple de réalisation décrit, seuls les émetteurs optiques des joncteurs incluent une source optique, celle-ci étant de longueur d'onde différente pour chacun des joncteurs.

Les M porteuses de longueur d'onde $\lambda_m$ issues de ces sources optiques et modulées (dans le cas où ces joncteurs sont utilisés pour des communications dans le sens descendant) ou non (dans le cas contraire) sont distribuées à tous les terminaux d'abonnés.

Le récepteur de chaque terminal d'abonné est muni en entrée de moyens de filtrage spectral, notés $F_{2n}$, accordables sur la longueur d'onde de la source optique du joncteur associé à ce terminal dans une communication , cette longueur d'onde étant indiquée par des moyens d'affectation dynamique des différents joncteurs aux différents terminaux d'abonnés, dont un exemple, faisant intervenir un (M+1)ième joncteur, dit de commande, noté $J_o$, non destiné aux communications entre le centre local et les abonnés, mais à l'établissement de telles communications, sera décrit dans ce qui suit. On notera que ce joncteur de commande n'est en rien différent des joncteurs de communication et qu'il pourrait être remplacé par un de ces M joncteurs de communication s'il venait à tomber en panne ; sa fonction sera considérée en plus amples détails lors de l'explication de l'établissement d'une communication dans un centre local de raccordement d'abonnés muni d'un tel système de raccordement. L'émetteur optique, le récepteur optique, et la longueur d'onde d'émission de la source optique de ce joncteur $J_o$ sont notés respectivement $S_{10}$, $D_{10}$ et $\lambda_o$.

Un moyen pour réaliser une distribution à tous les terminaux d'abonnés de l'ensemble des porteuses (modulées ou non) issues de tous les joncteurs, cet ensemble étant noté

$$\lambda_o + \sum_m \lambda_m,$$

consiste à utiliser un coupleur optique dit en étoile, CE, ayant des premiers accès connectés respectivement aux joncteurs et des seconds accès connectés respectivement aux terminaux d'abonnés.

Le coupleur CE a en l'occurrence M premiers accès connectés respectivement aux M joncteurs de communication, (plus un (M+1)ième premier accès supplémentaire connecté au joncteur de commande évoqué plus haut dans le cas de l'exemple de réalisation desdits moyens d'affectation dynamique évoqué ci-dessus), et R seconds accès susceptibles d'être raccordés à R terminaux d'abonnés, où R désigne le nombre d'abonnés pouvant être raccordés, avec $R \geq N$, et N de ces accès effectivement raccordés aux N terminaux d'abonnés considérés ici.

Lors d'une communication entre un joncteur et un abonné, le récepteur du terminal d'abonné est accordé sur la longueur d'onde de l'émetteur de ce joncteur.

Dans l'exemple de réalisation considéré ici, où les terminaux d'abonnés ne comportent pas de source optique, l'émetteur de ce terminal d'abonné applique alors sa modulation à la porteuse optique provenant de ce joncteur, celle-ci pouvant être (ou pas) déjà modulée. Une transmission bidirectionnelle peut alors être réalisée, en l'occurrence sur une même fibre optique, (via le coupleur CE), et en l'occurrence en utilisant deux formats de modulation, un pour le sens dit montant et un autre pour le sens dit descendant, ainsi qu'il sera décrit plus en détail ci-après.

Le coupleur CE étant par nature réversible, l'ensemble, noté

$$\sum_i \lambda_i$$

avec $0 \leq i \leq M$, des porteuses ainsi réémises par les terminaux des abonnés en communication, et modulées (dans le cas où les abonnés transmettent vers le centre local) ou non (dans le cas contraire), est inversement distribué à tous les joncteurs. Dans chaque joncteur, un filtre optique spectral, noté $F_{1m}$ pour les joncteurs de communication $j_m$ et $F_{10}$ pour le joncteur de commande $J_o$, permet de sélectionner, en amont du récepteur de ce joncteur, la longueur d'onde de l'émetteur de ce joncteur.

On notera que dans le cas considéré ici de transmission bidirectionnelle sur une même fibre optique, des coupleurs, non expressément figurés sur le dessin, peuvent être utilisés dans les joncteurs et dans les terminaux d'abonnés pour y distinguer les sens émission et réception.

Au travers de cette architecture en étoile , toutes les fibres de lignes d'abonnés, utilisées ou non, sont raccordées au centre local CL. Leur utilisation, ou non, ne nécessite aucune connexion/déconnexion physique du côté du centre local.

Bien qu'il existe une liaison physique entre chaque abonné et le centre local, il n'y a ainsi pas de liaison permanente entre un joncteur et un abonné déterminés, d'où un rendement amélioré par rapport aux systèmes de raccordement antérieurs, par la possibilité d'avoir un nombre de joncteurs de communication M inférieur au nombre de terminaux d'abonnés raccordés N.

En outre, la sécurisation est intrinsèque au système. Il n'y a donc pas besoin de joncteur de secours particulier, ni de dispositif de commutation spécifique. La défaillance d'un joncteur quelconque n'empêche pas un abonné d'avoir des communications; elle entraîne simplement une augmentation du taux de concentration. Si c'est le joncteur de commande qui est défaillant, puisque tous les joncteurs sont fonctionnellement identiques et qu'ils sont dynamiquement rattachés à tous les abonnés, n'importe quel joncteur peut le remplacer temporairement.

Par ailleurs, dans le mode de réalisation ainsi décrit, l'absence de source optique chez l'abonné élimine la nécessité d'un asservissement en longueur d'onde entre tous les abonnés. On notera toutefois qu'un asservissement est requis pour les filtres de réception des terminaux d'abonnés, ainsi qu'entre les sources optiques du centre local. Il est cependant dans ce dernier cas facilité par le fait que ces sources sont toutes localisées dans le centre local. Les terminaux d'abonnés peuvent ainsi, dans ce mode de réalisation, être identiques.

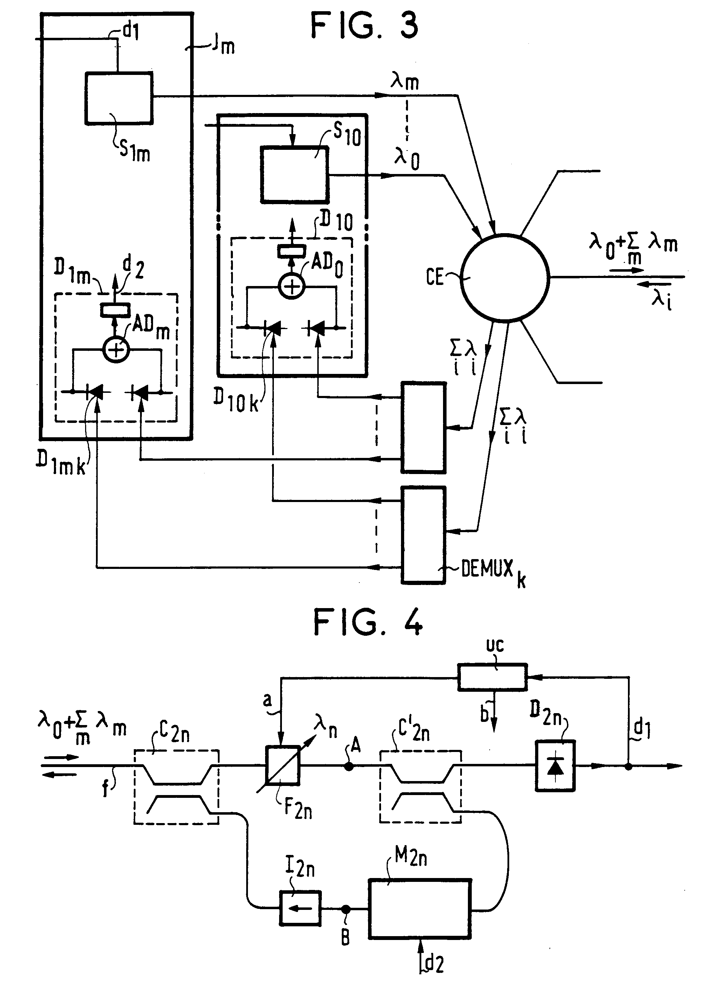

On a illustré sur la figure 3 une variante de réalisation des moyens de filtrage spectral que forment les filtres $F_{10}$ et $F_{1m}$, repérés sur la figure 2, du centre local, les autres éléments constitutifs de ce centre local étant ceux déjà décrits en relation avec la figure 2, et étant notés avec les mêmes références que sur cette figure 2.

On a en outre référencé $d_1$ le signal modulant la source optique d'un joncteur de communication $J_m$ ou celles du joncteur de commande $J_o$ et correspondant en l'occurrence aux informations à émettre vers un abonné par l'intermédiaire de ce joncteur, et $d_2$ les informations fournies par le récepteur optique d'un joncteur de communication $J_m$ ou du joncteur de commande $J_o$, ces informations étant celles émises par l'abonné raccordé à ce joncteur pour une communication déterminée dans le cas d'un joncteur de communication ou par un abonné non encore en communication mais demandant à l'être dans le cas du joncteur de commande, ainsi qu'il sera précisé plus loin.

Sur cette figure 3, le coupleur dit en étoile CE, est muni en l'occurrence de M+1 premiers accès, dits en émission, connectés respectivement à l'émetteur des M+1 joncteurs et de R-(M+1) premiers accès dits en réception dont K, avec $1 \leqq K \leqq R - (M+1)$, sont utilisés ainsi qu'il va être précisé ci-après.

Sur cette figure 3 les moyens de filtrage spectral comportent K démultiplexeurs $DEMUX_k$ avec $1 \leqq k \leqq K$, séparant chacun l'ensemble des longueurs d'onde reçues sur l'un des R-(M+1) premiers accès en réception du coupleur, en différentes longueurs d'onde attribuées respectivement aux différents joncteurs.

Ainsi qu'illustré sur la figure 3 pour K > 1, à ces moyens de filtrage spectral, sont associés dans les récepteurs optiques respectifs $D_{1m}$ et $D_{10}$ des (M+1) joncteurs $J_m$ et $J_o$ respectivement (M+1) additionneurs notés $AD_m$ dans le cas des joncteurs de communication et $AD_o$ dans le cas du joncteur de commande. Chacun de ces additionneurs additionne K signaux électriques issus de K photodétecteurs que comporte alors le récepteur optique $D_{1m}$ ou $D_{10}$ incluant l'additionneur considéré et qui sont notés $D_{1mk}$ pour les récepteurs optiques $D_{1m}$ des joncteurs $J_m$ et $D_{10k}$ pour le récepteur optique $D_{10}$ du joncteur $J_o$. Les K photodétecteurs du récepteur optique de chaque joncteur reçoivent eux-mêmes respectivement K signaux optiques de même longueur d'onde issus des K démultiplexeurs, cette longueur d'onde étant celle à laquelle émet l'émetteur optique de ce joncteur. Les informations $d_2$ relatives à chaque joncteur sont reconstituées dans le récepteur optiques $D_{1m}$ ou $D_{10}$ du joncteur considéré à partir du signal de sortie de l'additionneur $AD_{mk}$ ou $AD_o$ de ce récepteur après traitement par un circuit électronique (non référencé).

Dans le principe, un seul démultiplexeur suffirait, les organes additionneurs devenant alors inutiles.

Le mode de réalisation ainsi décrit utilisant K démultiplexeurs permet cependant de compenser en partie le phénomène de répartition de puissance interne au coupleur CE, et de faciliter l'opération de reconstitution des signaux $d_2$ émis par les abonnés réalisée dans les récepteurs des joncteurs. En pratique le nombre K pourra avantageusement être choisi égal à 2, ce qui est le cas pour la réalisation illustrée sur la figure 3.

Il serait par ailleurs possible d'effectuer non pas une addition électrique des signaux électriques obtenus par conversion opto-électronique des signaux optiques de même longueur d'onde issus des K démultiplexeurs, mais directement une addition optique des signaux de même longueur d'onde issus des K démultiplexeurs. L'addition électrique a cependant l'avantage de permettre un maintien en fonctionnement en cas de panne de l'un des K photodétecteurs d'un joncteur.

Le terminal d'abonné $TA_n$ illustré sur la figure 4, comporte, outre les éléments $D_{2n}$ et $F_{2n}$ déjà décrits en relation avec la figure 2,

- un coupleur $C_{2n}$ permettant d'utiliser une seule fibre f pour les deux sens de transmission, ladite fibre f étant connectée à l'un des R seconds accès du coupleur en étoile,
- un coupleur $C'_{2n}$ permettant de prélever une partie de la porteuse optique sélectionnée par le filtre $F_{2n}$ pour que le message $d_1$ qu'elle transporte puisse être détecté par le récepteur $D_{2n}$, l'autre partie étant destinée à être modulée par les informations, $d_2$, émises par l'abonné, puis renvoyée vers le joncteur considéré,
- un modulateur $M_{2n}$ formant la source optique $S_{2n}$ de la figure 2 et réalisé par exemple à l'aide d'un amplificateur optique dont la modulation du gain permet de transmettre un message tel que $d_2$ sur la porteuse optique qui lui est appliquée en entrée,
- un isolateur optique $I_{2n}$ qui protège la sortie de ce modulateur du flux lumineux incident sur ce terminal d'abonné.

On explique maintenant le mode d'établissement d'une communication dans un tel système de raccordement.

Comme il a été vu ci-dessus, l'un des joncteurs, $J_o$, dit joncteur de commande, est destiné à l'établissement des communications avec les abonnés.

$\lambda_o$ étant la longueur d'onde de la source optique de ce joncteur particulier, lorsqu'un abonné n'est pas en communication, son filtre est accordé sur cette longueur d'onde $\lambda_o$. Deux cas sont alors possibles :

- un abonné demande une communication : il transmet cette demande par modulation de la porteuse à la longueur d'onde $\lambda_o$ émise par la source optique du joncteur de commande $J_o$, et sa demande sera reçue par le récepteur de ce joncteur de commande $J_o$. Celui-ci, après interrogation de l'unité de commande UC du centre local, comme schématisé par la liaison correspondante sur la figure 2, répondra en envoyant à cet abonné un numéro de joncteur détecté disponible par l'unité de commande UC, (grâce à un ensemble de liaisons entre ces joncteurs et cette unité de commande, comme schématisé sur la figure 2) ce joncteur étant celui qui sera associé à ce terminal pour cette communication, et ce numéro indiquant la position sur laquelle doit être mis le filtre de réception de ce terminal ; une commande de ce filtre est pour cela effectuée par un signal de commande a délivré par une unité de commande de ce terminal, notée uc, qui reçoit les informations $d_1$ issus du récepteur $D_{2n}$,

- une communication est demandée avec un abonné par l'intermédiaire de l'unité de commande UC du centre local : le joncteur de commande transmet à l'abonné le numéro d'un joncteur de communication détecté disponible par l'unité de commande UC du centre local. Dans le cas où l'abonné est déjà en communication avec un autre joncteur, l'unité de commande UC du centre local renvoit un message "poste occupé" vers l'abonné demandeur. Si l'abonné n'est pas déjà en communication avec un autre joncteur, une communication avec le joncteur considéré peut s'établir, après qu'un accord du filtre $F_{2n}$ du terminal de cet abonné ait été réalisé, suivant la procédure décrite ci-dessus, et après que cet abonné ait été averti de cet appel par le joncteur de communication que le joncteur de commande vient de lui associer, ce qui est représenté symboliquement par l'émission d'un signal b par l'unité de commande uc.

En cas de défaillance du joncteur de commande, comme indiqué ci-avant, celui-ci peut être remplacé par n'importe quel autre joncteur, ce qui n'aura pour effet que de réduire temporairement d'une unité le nombre de joncteurs alloués aux communications.

La fonction à réaliser pendant le déroulement d'une communication est une transmission bidirectionnelle entre un joncteur et un abonné.

Comme indiqué plus haut, cette transmission bidirectionnelle utilise en l'occurrence la même porteuse optique comme support d'information dans les deux sens, cette porteuse optique étant issue d'une source optique localisée en l'occurrence au centre local.

Une façon de réaliser une telle transmission bidirectionnelle consiste alors à utiliser, pour chaque sens de transmission, des moyens de modulation de l'un des paramètres de ladite porteuse, ce paramètre étant différent pour les deux sens, avec une exception dans le cas de l'intensité où il peut être le même, et avec dans tous les cas la condition que si la modulation appliquée en premier, soit pour la transmission du centre local vers le terminal d'abonné, est une modulation d'intensité, elle l'est avec un taux de modulation suffisamment faible pour laisser en permanence de la puissance sur laquelle celle appliquée en second, soit pour la transmission du terminal d'abonné vers le centre local, puisse s'exercer.

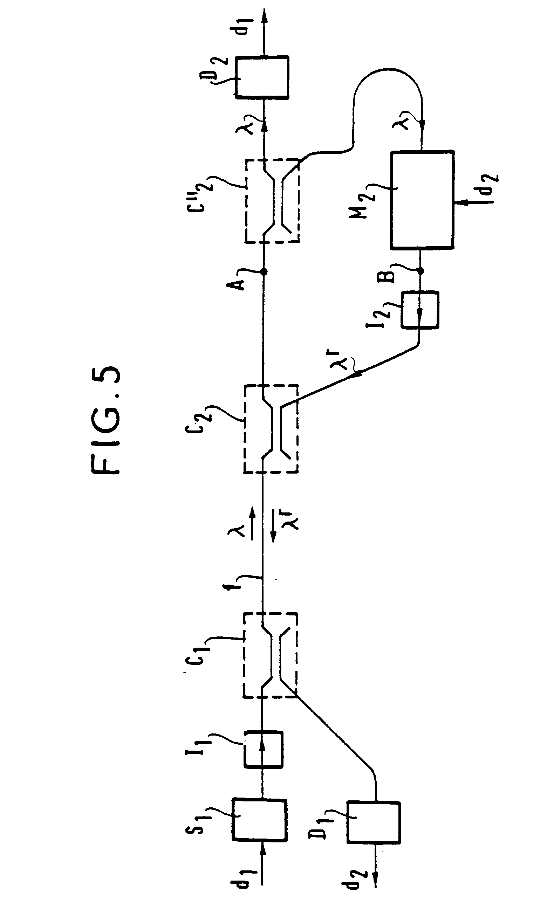

Un exemple de réalisation d'une telle transmission bidirectionnelle est maintenant décrit en relation avec les figures 5, 6, 7A et 7B.

Pour cette description on notera "terminal source" un joncteur d'abonné, qu'il soit de communication ou de commande, et "terminal utilisateur" un terminal d'abonné.

Suivant cet exemple de réalisation, une transmission bidirectionnelle, simultanée, et au moyen d'une seule porteuse optique, entre un terminal source, comportant une source optique fournissant ladite porteuse, et un terminal utilisateur, est obtenue par modulation de l'intensité de cette porteuse pour la transmission dans les deux sens, à savoir descendant (soit du terminal source vers le terminal utilisateur) et montant (soit du terminal utilisateur vers le terminal source), la modulation d'intensité appliquée pour la transmission dans le sens descendant étant effectuée entre un niveau bas, Pb, relativement éloigné de zéro, et un niveau haut, Ph, et la modulation appliquée pour la transmission dans le sens montant étant effectuée entre un niveau Po voisin de zéro et le niveau Pb, c'est-à-dire sur la puissance optique émise par la source optique et qui n'a pas été modulée pour la transmission dans le sens descendant.

La modulation d'intensité pour la transmission dans le sens descendant est par exemple une modulation directe d'intensité de ladite porteuse.

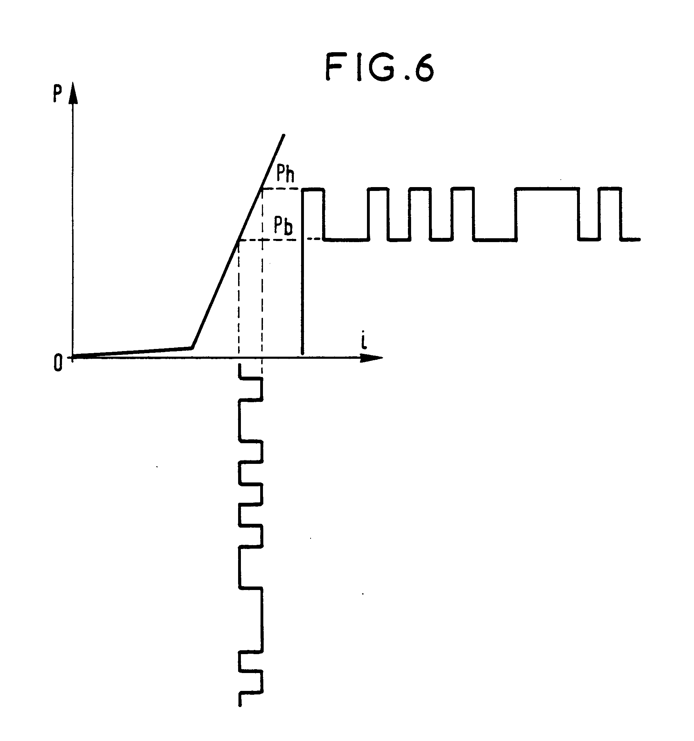

La manière de générer un tel signal optique par modulation directe est rappelée sur la figure 6 qui représente d'une part la forme générale de la caractéristique de puissance optique de sortie d'une source optique telle qu'une diode laser, en fonction de son courant de commande i, et d'autre part la forme de la puissance optique de sortie en fonction du temps, à titre d'exemple pour un courant de commande sous forme numérique correspondant par exemple à la séquence 1001010100111010, et en l'occurence avec une modulation appliquée entre les niveaux Pb et Ph tels que définis ci-dessus.

Comme illustré sur la figure 5, l'équipement terminal source comporte, suivant ce premier exemple de réalisation :

- un émetteur optique $S_1$ comportant une source optique telle qu'une diode laser émettant à une longueur d'onde notée , munie d'une entrée de commande pour l'application d'un signal $d_1$ de modulation d'intensité, en l'occurence d'un signal de modulation directe, à transmettre dans le sens descendant,
- un récepteur optique $D_1$ pour la détection d'un signal $d_2$ de modulation transmis dans le sens montant,
- un coupleur passif $C_1$ permettant d'utiliser une seule fibre f pour les deux sens de transmission, et dont trois accès sont connectés à la sortie de l'émetteur $S_1$, à l'entrée du récepteur $D_1$, et à une extrémité de la fibre f, respectivement,
- un isolateur optique $I_1$ qui protège la sortie de l'émetteur optique $S_1$ du flux lumineux reçu par le terminal source.

Comme illustré également sur la figure 5, l'équipement terminal utilisateur comporte, suivant ce premier exemple de réalisation :

- un premier coupleur passif $C_2$ permettant d'utiliser une seule fibre pour les deux sens de transmission,
- un deuxième coupleur passif $C''_2$ permettant de prélever une partie de la porteuse optique reçue pour que le message $d_1$ qu'elle transporte dans le sens descendant puisse être détecté par un récepteur optique $D_2$ de ce terminal, l'autre partie étant destinée à être modulée par le message $d_2$ à émettre par le terminal utilisateur, et renvoyée au terminal source, toujours à la longueur d'onde $\lambda$, mais notée $\lambda^r$ (pour renvoyée),
- un moyen de modulation $M_2$, par exemple composant électro-optique du type modulateur d'intensité ou amplificateur optique à semiconducteur, qui reçoit d'une part ladite partie destinée à être modulée, issue du coupleur $C''_2$, et un signal de commande de modulation d'intensité, correspondant aux informations $d_2$ à émettre par le terminal utilisateur,
- un isolateur optique $I_2$ qui protège la sortie du modulateur $M_2$ du flux lumineux reçu par le terminal utilisateur,
- le récepteur optique $D_2$ pour la détection du signal transmis dans le sens descendant, restituant les informations $d_1$ émises par le terminal source.

Le coupleur $C''_2$ est muni d'un premier accès connecté à l'un des accès, dit second accès, du coupleur $C_2$, d'un second accès connecté au récepteur optique $D_2$, et d'un troisième accès connecté à une entrée du moyen de modulation, $M_2$, comme indiqué plus haut.

L'isolateur $I_2$ est muni d'un accès connecté à la sortie du moyen de modulation $M_2$ et d'un accès connecté à l'un des accès, dit troisième accès, du coupleur $C_2$.

Le coupleur $C_2$ est en outre muni d'un premier accès connecté à une extrémité de la fibre f.

On notera que l'équipement terminal utilisateur, composé d'un récepteur optique, d'un modulateur, et de quelques composants optiques passifs, est donc relativement simple.

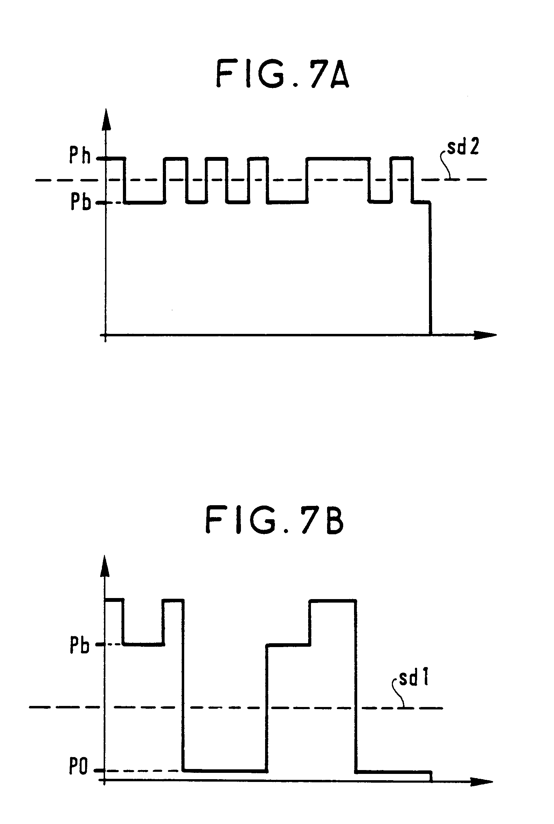

Comme illustré sur la figure 7A qui représente la forme temporelle de la puissance optique au point A de la figure 5, c'est-à-dire de la puissance optique reçue par le détecteur que comporte en l'occurence le récepteur D2 du terminal utilisateur, le seuil sd2 de décision de ce récepteur est réglé avantageusement à une valeur sensiblement égale à la demi-somme des valeurs des niveaux Pb et Ph.

Comme illustré sur la figure 7B qui représente la forme temporelle de la puissance optique au point B de la figure 5, c'est-à-dire en sortie du modulateur d'émission $M_2$ de l'équipement terminal utilisateur, le seuil sd1 de décision du récepteur $D_1$ du terminal source est réglé avantageusement à une valeur sensiblement égale à la demi-somme des valeurs des niveaux PO et Pb.

On notera que de nombreuses modifications pourraient être apportées aux schémas des figures 2, 3 et 4 tout en restant dans le cadre de l'invention.

Il serait ainsi possible d'utiliser une source optique également dans les émetteurs des terminaux d'abonnés, et d'assurer alors également une distribution de l'ensemble des longueurs d'ondes délivrées par ces sources, modulées (dans le cas où les abonnés sont en communication) ou non (dans le cas contraire) à tous les joncteurs. Le schéma d'établissement d'une communication exposé plus haut resterait alors pour l'essentiel valable à condition de prévoir une telle source optique qui serait apte à délivrer la longueur d'onde $\lambda_o$ pendant la phase d'établissement d'une communication, et une longueur d'onde distincte de $\lambda_o$ pendant une communication.

Il serait aussi possible d'utiliser entre le centre local et les terminaux d'abonnés, une fibre par sens de transmission au lieu d'une seule fibre pour les deux sens de transmission comme représenté sur les figures 2 à 4, auquel cas on utiliserait deux coupleurs en étoile, un par sens de transmission.

## Revendications

1/ Système de raccordement optique de terminaux d'abonnés à un centre local d'un réseau de télécommunications, lesdits terminaux d'abonnés comportant chacun un émetteur optique ($S_{2n}$) dit second émetteur optique et un récepteur optique ($D_{2n}$), dit second récepteur optique, et le centre local comportant une pluralité de joncteurs comportant chacun un émetteur optique ($S_{1m}$) dit premier émetteur optique et un récepteur optique ($D_{1m}$) dit premier récepteur optique, caractérisé en ce qu'il comporte, pour un sens de transmission donné, des moyens (CE) de distribution, à tous les récepteurs optiques, du signal optique émis par chacun des émetteurs optiques, sur une porteuse optique différente pour chacun de ces émetteurs, et des moyens de filtrage spectral du signal optique distribué vers chaque récepteur optique, sélectionnant la porteuse optique de celui des émetteurs qui lui est associé, pour une communication déterminée, par des moyens d'affectation dynamique de ces différents émetteurs optiques à ces différents récepteurs optiques.

2/ Système selon la revendication 1, caractérisé en ce que lesdits moyens de distribution (CE) comportent un coupleur dit en étoile, muni de premiers accès connectés respectivement auxdits joncteurs, et de seconds accès connectés respectivement auxdits terminaux d'abonnés.

3/ Système selon l'une des revendications 1 et 2, caractérisé en ce qu'une seule source optique est utilisée pour les deux sens de transmission entre l'un quelconque des joncteurs et l'un quelconque des terminaux d'abonnés, localisée dans l'un ou l'autre des émetteurs optiques respectifs du joncteur et du terminal.

4/ Système selon les revendications 2 et 3, caractérisé en ce que lesdits premiers accès comportant des accès dits en émission connectés respectivement auxdits premiers émetteurs optiques, et des accès en réception connectés respectivement auxdits premiers récepteurs optiques, et en ce que, ladite source optique étant localisée dans lesdits premiers émetteurs optiques, les moyens de filtrage spectral comportent des moyens de démultiplexage spectral ($DEMUX_k$) du signal optique reçu sur l'un au moins desdits premiers accès en réception du coupleur en étoile, ces moyens de démultiplexage spectral fournissant des signaux aiguillés respectivement vers lesdits premiers récepteurs optiques.

5/ Système selon la revendication 4, caractérisé en ce que dans le cas où lesdits moyens de démultiplexage spectral effectuent un démultiplexage spectral des signaux optiques reçus sur deux au moins desdits premiers accès en réception du coupleur en étoile, il comporte en outre des moyens ($AD_m$) d'addition de ceux des signaux issus de ce démultiplexage qui sont en sortie de ces moyens de démultiplexage, sur une même porteuse optique.

6/ Système selon l'une des revendications 1 à 5, caractérisé en ce que lesdits moyens d'affectation dynamique comportent eux-mêmes un premier émetteur-récepteur optique équipant un joncteur supplémentaire ($J_o$) dit de commande émettant et recevant sur une longueur d'onde particulière utilisée par ce joncteur et par lesdits terminaux d'abonnés pendant les phases d'établissement de communications à l'intérieur de ce réseau.

FIG.1

FIG.2

EP 0 536 041 A1

# FIG. 3

$\lambda_m$

$\lambda_0$

$\lambda_0 + \sum\limits_m \lambda_m$

$\overleftarrow{\lambda_i}$

$\sum\limits_i \lambda_i$

$\sum\limits_i \lambda_i$

CE

$J_m$

d1

$S_{1m}$

$S_{10}$

$D_{10}$

$AD_0$

$D_{1m}$

d2

$AD_m$

$D_{10k}$

$D_{1mk}$

$DEMUX_k$

# FIG. 4

$\lambda_0 + \sum\limits_m \lambda_m$

$C_{2n}$

f

a

$\lambda_n$

A

$C'_{2n}$

uc

b

$D_{2n}$

d1

$F_{2n}$

$I_{2n}$

$M_{2n}$

B

d2

# FIG.5

EP 0 536 041 A1

# FIG.6

# FIG.7A

# FIG.7B

EP 0 536 041 A1

Office européen
des brevets

**RAPPORT DE RECHERCHE EUROPEENNE**

Numero de la demande

EP    92 40 2667

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X<br>Y<br>A | GB-A-2 224 902 (STC PLC)<br>* page 3, ligne 10 - page 5, ligne 7 *<br>* page 5, ligne 26 - ligne 33; figures 1,2 *<br>--- | 1,2<br>3,4<br>6 | H04B10/20<br>H04B10/14 |
| Y<br><br><br><br>A | JOURNAL OF LIGHTWAVE TECHNOLOGY.<br>no. 7, Juillet 1986, NEW YORK US<br>pages 755 - 758<br>CHENG ET. AL. 'A distributed star network architecture for interoffice applications'<br>* page 755, alinéa 2; figure 1 *<br>--- | 3<br><br><br><br>1,2 | |
| Y<br><br><br><br><br><br>A | PROCEEDINGS OF THE IEEE.<br>vol. 75, no. 11, Novembre 1987, NEW YORK US<br>pages 1512 - 1523<br>TOMLINSON ET BRACKETT 'Telecommunications applications of integrated optics and optoelectronics'<br>* page 1519, colonne de gauche, ligne 6 - ligne 24; figure 2 * | 4<br><br><br><br><br><br>1,2,5 | |

| | | | DOMAINES TECHNIQUES RECHERCHES (Int. Cl.5) |
|---|---|---|---|
| | | | H04B<br>H04J |

Le présent rapport a été établi pour toutes les revendications

| Lieu de la recherche | Date d'achèvement de la recherche | Examinateur |
|---|---|---|
| LA HAYE | 08 JANVIER 1993 | WAGNER U. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

15